# EUROPEAN PATENT APPLICATION

(11) **EP 4 815 119 A1**
(43) Date of publication of application: **30.09.2026**
(21) Application number: 24894259.1
(22) Date of filing: 29.03.2024
(51) Int. Cl.: H01M 50/102, H01M 50/148, H01M 10/058, B23K 26/21

(54) **ALL-SOLID RECHARGEABLE BATTERY**

(30) Priority: 24.11.2023 KR 20230166066
(71) Applicant: SAMSUNG SDI CO., LTD., Yongin-si, Gyeonggi-do 17084 (KR)
(72) Inventor: KIM, Joonghun, Yongin-si, Gyeonggi-do 17084 (KR)
(74) Representative: Michalski Hüttermann & Partner mbB
(86) International application number: PCT/KR2024/004047
(87) International publication number: WO 2025/110361

(57) **Abstract**

An embodiment provides an all-solid rechargeable battery including: an all-solid cell stack; a first can covering a lower portion of the all-solid cell stack; and a second can that covers an upper portion of the all-solid cell stack and is welded to the first can to press the all-solid cell stack in a direction of the first can, wherein the first can includes a first welded surface including an uneven structure welded to the second can.

## Description

### [Technical Field]

The present disclosure relates to an all-solid rechargeable battery.

[**Background Art**]

Recently, as the explosion risk of batteries using liquid electrolytes has been reported, development of all-solid rechargeable batteries is being conducted. An all-solid rechargeable battery is a battery in which all materials are made of solid, and refers to a battery in which a solid electrolyte is used.

The all-solid-state rechargeable battery is safe because there is no risk of explosion due to electrolyte leakage, and has the advantage of being easy to manufacture a thin battery.

Due to the characteristics of all-solid rechargeable batteries of which all materials are made of solid, the interfacial resistance between the laminates that configure the all-solid rechargeable battery (for example, the interfacial resistance between the electrode and the solid electrolyte layer) should be minimized.

### [Disclosure]

### [Technical Problem]

An embodiment attempts to provide an all-solid rechargeable battery with minimized interface resistance, even if an all-solid cell stack is wrapped by a can.

### [Technical Solution]

An embodiment provides an all-solid rechargeable battery including: an all-solid cell stack; a first can covering a lower portion of the all-solid cell stack; a second can that covers an upper portion of the all-solid cell stack and is welded to the first can to press the all-solid cell stack in a direction of the first can; and a first cap that covers one side portion of the all-solid cell stack and into which the first can and the second can are inserted, wherein the first can includes a first welding surface welded to the second can, and a first non-welding surface that is non-welded to the second can and extends from the first welding surface in a direction of the first cap to be inserted into the first cap..

The first non-welding may be inclined and extended so as to be far away from the second can from the first welding surface.

At least a portion of the first non-welding surface may be in non-contact with the second can.

A distance between the first non-welding surface and the second can may have a first length when the all-solid cell stack is pressed, and may has a second length longer than the first length due to restoring force of the first can when the first non-welding surface is inserted into the first cap.

The first welding surface may include an uneven structure extending in a direction of the first non-welding surface.

The uneven structure of the first welding surface may include a convex surface.

The uneven structure of the first welding surface may include a triangular surface.

The first welding surface may include a step structure recessed from a direction of the second can.

The step structure of the first welding surface may include a first blocking wall disposed between the second can and the all-solid cell stack.

The all-solid rechargeable battery may further include a second cap that covers the other side portion of the all-solid cell stack and into which the first can and the second can are inserted.

The first non-welding surface may extend from the first welding surface in a direction of the second cap to be inserted into the second cap.

The first can may further include a first plate portion covering a lower portion of the all-solid cell stack; and a first side wall portion that is bent and extended to surround the all-solid cell stack from the first plate portion and in which the first welding surface and the first non-welding surface are disposed.

The second can may include a second welding surface welded to the first welding surface of the first can; and a second non-welding surface that is non-welded to the first non-welding surface of the first can and extends from the second welding surface in a direction of the first cap to be inserted into the first cap.

The second non-welding surface may be inclined and extended from the second welding surface to be away from the first non-welding surface of the first can.

At least a portion of the second non-welding surface may be in non-contact with the first non-welding surface of the first can.

A distance between the second non-welding surface and the first non-welding surface may have a first length when the all-solid cell stack is pressed, and may have a second length longer than the first length due to restoring force of the second can and the first can when the second non-welding surface and the first non-welding surface is inserted into the first cap.

An interface between the second welding surface and the first welding surface may include an uneven structure extending in a direction of the first cap.

The second welding surface may include a step structure recessed from a direction of the first can.

The step structure of the second welding surface may include a second blocking wall disposed between the first can and the all-solid cell stack.

The second can may include a second plate portion covering an upper portion of the all-solid cell stack; and a second side wall portion that is bent and extended to surround the all-solid cell stack from the second plate portion and in which the second welding surface and the second non-welding surface are disposed.

### [Advantageous Effects]

According to the embodiment, it is possible to provide an all-solid rechargeable battery with minimized interface resistance, even if an all-solid cell stack is wrapped by a can.

### [Description of the Drawings]

FIG. 1 illustrates a cross-sectional view of an all-solid battery.
FIG. 2 illustrates a cross-sectional view of an all-solid battery including a precipitation-type negative electrode.
FIG. 3 illustrates a perspective view of an all-solid rechargeable battery according to an embodiment.
FIG. 4 illustrates a cross-sectional view taken along line IV-IV of FIG. 3.
FIG. 5 illustrates a cross-sectional view taken along line V-V of FIG. 3.
FIG. 6 illustrates a perspective view of an example in which a first cap is coupled to one side portion of each of a first can and a second can in an all-solid rechargeable battery according to an embodiment.
FIG. 7 illustrates a perspective view of an all-solid rechargeable battery according to another embodiment.
FIG. 8 illustrates a perspective view of an all-solid rechargeable battery according to another embodiment.
FIG. 9 illustrates a perspective view of an all-solid rechargeable battery according to another embodiment.
FIG. 10 illustrates a cross-sectional view taken along line X-X of FIG. 9.
FIG. 11 illustrates a partial cross-sectional view of a case in which a first welding surface and a second welding surface of the all-solid rechargeable battery according to another embodiment shown in FIG. 10 is welded using a laser beam.
FIG. 12 illustrates a cross-sectional view of an all-solid rechargeable battery according to another embodiment.
FIG. 13 illustrates a perspective view of an all-solid rechargeable battery according to another embodiment.
FIG. 14 illustrates a perspective view of an all-solid rechargeable battery according to another embodiment.
FIG. 15 illustrates a cross-sectional view taken along line XV-XV of FIG. 14.

### [Mode for Invention]

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

In addition, unless explicitly described to the contrary, the word "comprise" and variations such as "comprises" or "comprising" will be understood to imply the inclusion of stated elements but not the exclusion of any other elements.

In the drawings, the thicknesses of layers, films, panels, areas, regions, and the like are exaggerated for clarity, and like reference numerals designate like elements throughout the specification. It will be understood that when an element such as a layer, film, area, region, or substrate is referred to as being "on" or "above" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface. Here, "or" is not to be construed as an exclusive meaning, and for example, "A or B" is construed to include A, B, A+B, and the like.

### Positive Electrode for All-Solid rechargeable Battery

In an embodiment, a positive electrode for an all-solid rechargeable battery including a current collector and a positive electrode active material layer disposed on the current collector is provided, wherein the positive electrode active material layer includes at least one of a positive electrode active material, a sulfide-based solid electrolyte, a binder, and a conductive material. However, the present disclosure is not limited thereto, and the positive electrode for the all-solid rechargeable battery may include more or less components than the above-described components.

In the embodiment, the positive electrode for the all-solid rechargeable battery is manufactured by applying a positive electrode composition including at least one of a positive electrode active material, a sulfide-based solid electrolyte, a binder, and a conductive material to a current collector, followed by drying and roll-pressing.

### Positive Active Material

The positive electrode active material may be applied without limitation as long as it is generally used in all-solid rechargeable batteries. For example, the positive electrode active material may be a compound capable of reversible intercalation and deintercalation of lithium, and may include a compound represented by any one of the following chemical formulas.

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 <α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 <α <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 <α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2);

LiₐFePO₄ (0.90 ≤ a ≤ 1.8).

In the above chemical formulas, A is selected from the group consisting of Ni, Co, Mn, and a combination thereof, X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), and lithium nickel manganese oxide (NM), lithium manganese oxide (LMO), or lithium ferrous phosphate oxide (LFP).

The positive electrode active material may include a lithium nickel-based oxide represented by Chemical Formula 1 below, a lithium cobalt-based oxide represented by Chemical Formula 2 below, a lithium ferrous phosphate-based compound represented by Chemical Formula 3 below, or a combination thereof.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M1 and M2 are each one or more elements independently selected from the group consisting of Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Chemical Formula 2, 0.9≤a2≤1.8, 0.6≤x2≤1, and M3 is one or more elements selected from the group consisting of Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴₁₋ₓ₃PO₄

In Chemical Formula 3, 0.9≤a3≤1.8, 0.6≤x3≤1, and M4 is one or more elements selected from the group consisting of Al, B, Ba, Ca, Ce, Co, Cr, Cu, F, Fe, Mg, Mn, Mo, Nb, P, S, Si, Sr, Ti, V, W, and Zr.

An average particle diameter (D50) of the positive electrode active material may be 1 µm to 25 µm, for example, 3 µm to 25 µm, 5 µm to 25 µm, 5 µm to 20 µm, 8 µm to 20 µm, or 10 µm to 18 µm. The positive electrode active material having the particle diameter range may be harmoniously mixed with other components in the positive electrode active material layer and may implement the high capacity and high energy density.

The positive electrode active material may be in the form of a secondary particle made by agglomeration of a plurality of primary particles, or may be in the form of a single particle. In addition, the positive electrode active material may be spherical or close to a spherical shape, or may be polyhedral or amorphous.

### Sulfide-Based Solid Electrolyte

The sulfide-based solid electrolyte may include, for example, Li₂S-P₂S₅, Li₂S-P₂S₅-LiX (X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each an integer, and Z is Ge, Zn, or Ga), Li₂S-GeS₂, Li₂S-SiS₂-Li₃PO₄, Li₂S-SiS₂-LiₚMO_{q} (p and q are integers, and M is P, Si, Ge, B, Al, Ga, or In), or a combination thereof.

The sulfide-based solid electrolyte may be obtained by, for example, mixing Li₂S and P₂S₅ at a molar ratio of 50:50 to 90:10 or 50:50 to 80:20 and optionally heat treating the mixture. Within the above mixing ratio range, the sulfide-based solid electrolyte having excellent ionic conductivity may be manufactured. Here, SiS₂, GeS₂, B₂S₃, and the like as other components may be further included to further improve the ionic conductivity.

A mechanical milling or solution method may be applied as a method of mixing sulfur-containing raw materials to prepare the sulfide-based solid electrolyte. The mechanical milling is a method of particulating and mixing starting materials by putting the starting materials, a ball mill, and the like in a reactor and stirring strongly the mixture. When using the solution method, the solid electrolyte may be obtained as a precipitate by mixing the starting materials in a solvent. In addition, when heat treatment is performed after mixing, crystals of the solid electrolyte may become more robust and the ionic conductivity may be improved. As an example, the sulfide-based solid electrolyte may be prepared by mixing sulfur-containing raw materials and heat-treating the sulfur-containing raw materials twice. In this case, the sulfide-based solid electrolyte having high ionic conductivity and robustness may be prepared.

As an example, the sulfide-based solid electrolyte particles may contain argyrodite type sulfide. The azirodite type sulfide may be expressed by, for example, LiₐM_{b}P_{c}S_{d}Aₑ (a, b, c, d, and e all are 0 or more to 12 or less, M is Ge, Sn, Si, or a combination thereof, A is F, Cl, Br, or I), and as a specific example, may be expressed by Chemical Formula of Li₇₋ₓPS₆₋ₓAₓ (x is 0.2 or more and 1.8 or less, and A is F, Cl, Br, or I). The azirodite type sulfide may specifically be Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, or the like.

The sulfide-based solid electrolyte particles containing such azirodite type sulfide may have high ionic conductivity close to the range of 10⁻⁴ to 10⁻² S/cm, which is ionic conductivity of a typical liquid electrolyte at room temperature, and may form a tight bond between the positive active material and the solid electrolyte without causing the decrease in the ion conductivity, and further form a tight interface between the electrode layer and the solid electrolyte layer. The all-solid rechargeable battery containing this may improve the performance of the battery such as rate characteristics, coulombic efficiency, and lifespan characteristics.

The ajirodite type sulfide-based solid electrolyte may be prepared by, for example, mixing lithium sulfide, phosphorus sulfide, and optionally lithium halide. After mixing them, the heat treatment may be performed. The heat treatment may include, for example, two or more heat treatment steps.

The average particle size D50 of the sulfide-based solid electrolyte particles according to an embodiment may be 5.0 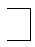 m or less and may be, for example, 0.1 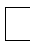 m to 5.0 □m, 0.1 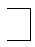 m to 4.0 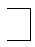 m, 0.1 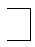 m to 3.0 □m, 0.5 □m to 2.0 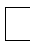 m, or 0.1 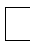 m to 1.5 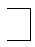 m. Alternatively, the sulfide-based solid electrolyte particles may be small particles having the average particle size D50 of 0.1 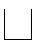 m to 1.0 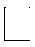 m depending on the location or purpose of use, or may be large particles having an average particle size D50 of 1.5 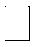 m to 5.0 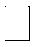 m. The sulfide-based solid electrolyte particles in this particle size range may effectively penetrate between the solid particles in the battery, and have excellent contactability with the electrode active material and the connectivity between the solid electrolyte particles. The average particle size of the sulfide-based solid electrolyte particles may be measured using a microscope image. For example, the particle size distribution may be obtained by measuring the size of about 20 particles in a scanning electron microscope image, and the D50 may be calculated from the particle size distribution.

The content of the solid electrolyte in the positive electrode for the all-solid rechargeable battery may be 0.5 wt% to 35 wt% and may be, for example, 1 wt% to 35 wt%, 5 wt% to 30 wt%, and 8 wt% to 25 wt%, or 10 wt% to 20 wt%. This is the content relative to the total weight of the components in the positive electrode, and specifically, may be the content relative to the total weight of the positive electrode active material layer.

In the embodiment, the positive electrode active material layer contains 50 wt% to 99.35 wt% of positive electrode active material, 0.5 wt% to 35 wt% of sulfide-based solid electrolyte, and 0.1 wt% to 10 wt% of fluorinated resin binder, and 0.05 wt% to 5 wt% of vanadium oxide, based on 100 wt% of positive electrode active material layer. When this content range is satisfied, the positive electrode for the all-solid rechargeable battery maintains the high adhesion while maintaining the high capacity and high ionic conductivity, and maintains the viscosity of the positive electrode composition at an appropriate level, thereby improving the processability.

### Binder

The binder serves to appropriately bind positive electrode active material particles to each other and appropriately bind the positive electrode active material to the current collector. As a representative example of the binder, polyvinylalcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, nylon, or the like, may be used, but the binder is not limited thereto.

### Conductive Material

The positive electrode active material layer may further include a conductive material. The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber containing copper, nickel, aluminum, silver, and the like; a conductive polymer such as a polyphenylene derivative; or a combination thereof.

The conductive material may be included in an amount of 0.1 wt% to 5 wt%, or 0.1 wt% to 3 wt% with respect to a total weight of each component of the positive electrode for an all-solid battery, or with respect to the total weight of the first positive electrode active material layer. Within the above content range, the conductive material can improve electrical conductivity without deteriorating battery performance.

When the positive electrode active material layer further includes a conductive material, the positive electrode active material layer may include 45 wt% to 99.25 wt% of the positive electrode active material, 0.5 wt% to 35 wt% of the sulfide-based solid electrolyte, 0.1 wt% to 10 wt% of the fluorine-based resin binder, 0.05 wt% to 5 wt% of the vanadium oxide, and 0.1 wt% to 5 wt% of the conductive material with respect to 100 wt% of the positive electrode active material layer.

Meanwhile, the positive electrode for a lithium rechargeable battery may further include an oxide-based inorganic solid electrolyte, in addition to the solid electrolyte described above. The oxide-based inorganic solid electrolyte may include, for example, Li₁₊ₓTi₂₋ₓAl PO₄₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), PB (Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y} PO₄₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, garnet-based ceramics Li₃₊ₓLa₃M₂O₁₂ (M= Te, Nb, or Zr; x is an integer from 1 to 10), or a combination thereof.

### All-Solid Rechargeable Battery

An embodiment provides an all-solid rechargeable battery including the positive electrode described above, a negative electrode, and a solid electrolyte layer positioned between the positive electrode and the negative electrode. The all-solid rechargeable battery may be referred to as an all-solid battery or an all-solid lithium rechargeable battery.

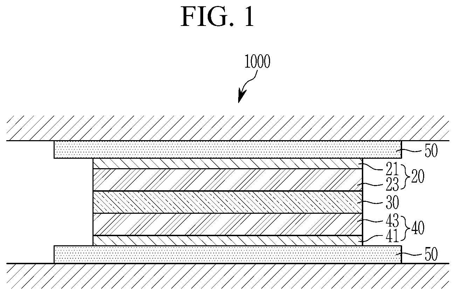

FIG. 1 illustrates a cross-sectional view of an all-solid rechargeable battery according to an embodiment. Referring to FIG. 1, an all-solid rechargeable battery module battery 1000 may have a structure in which an electrode assembly in which a negative electrode 40 including a negative electrode current collector 41 and a negative electrode active material layer 43, a solid electrolyte layer 30, and a positive electrode 20 including a positive electrode active material layer 23 and a positive electrode current collector 21 are stacked is accommodated in a case such as a pouch. The all-solid rechargeable battery 1000 may further include an elastic layer 50 on an outer side of at least one of the positive electrode 20 and the negative electrode 40. Although FIG. 1 shows one electrode assembly including the negative electrode 40, the solid electrolyte layer 30, and the positive electrode 20, an all-solid battery may be manufactured by stacking two or more electrode assemblies.

### Negative Electrode

The negative electrode for an all-solid battery may include, for example, a current collector and a negative electrode active material layer disposed on the current collector. The negative electrode active material layer includes a negative electrode active material and may further include a binder, a conductive material, and/or a solid electrolyte.

The negative electrode active material may include a material capable of reversibly intercalation/deintercalating lithium ions, lithium metal, an alloy of lithium metal, a material capable of being doped and undoped on lithium, or a transition metal oxide.

The material capable of reversibly intercalating/deintercalating lithium ions is a carbon-based negative electrode active material, and may include, for example, crystalline carbon, amorphous carbon, or a combination thereof. Examples of the crystalline carbon may include graphite such as amorphous, plate-like, flake-like, spherical or fibrous natural graphite or artificial graphite, and examples of the amorphous carbon may include soft carbon or hard carbon, mesophase pitch carbide, fired coke, and the like.

For the alloy of the lithium metal, an alloy of lithium and one or more metal selected from Na, K, Rb, Cs, Fr, Be, Mg, Ca, Sr, Si, Sb, Pb, In, Zn, Ba, Ra, Ge, Al and Sn may be used
For the material capable of being doped or undoped on the lithium, a Si-based negative electrode active material or an Sn-based negative electrode active material may be used. Examples of the Si-based negative electrode active material may include silicon, silicon-carbon composite, SiOₓ (0<x<2), and a Si-Q alloy (Q is an element selected from the group consisting of alkali metals, alkali earth metals, Group 13 elements, Group 14 elements, Group 15 elements, Group 16 elements, transition metals, rare-earth elements, and combinations thereof, but is not Si). Examples of the Sn-based negative electrode active material may include Sn, SnO₂, a Sn-R alloy (R is an element selected from the group consisting of alkali metals, alkali earth metals, Group 13 elements, Group 14 elements, Group 15 elements, Group 16 elements, transition metals, rare-earth elements, and combinations thereof, but is not Sn). In addition, a mixture of at least one thereof and SiO₂ may be used. The elements Q and R may be selected and used from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and a silicon particle and an amorphous carbon coating layer positioned on a surface of the core. The crystalline carbon may be artificial graphite, natural graphite, or a combination thereof. As the amorphous carbon precursor, coal-based pitch, mesophase pitch, petroleum-based pitch, coal-based oil, petroleum-based heavy oil, or polymer resin such as phenol resin, furan resin, and polyimide resin may be used. In this case, a content of silicon may be 10 wt% to 50 wt% with respect to a total weight of the silicon-carbon composite. In addition, a content of the crystalline carbon may be 10 wt% to 70 wt% with respect to the total weight of the silicon-carbon composite, and a content of the amorphous carbon may be 20 wt% to 40 wt% with respect to the total weight of the silicon-carbon composite. In addition, a thickness of the amorphous carbon coating layer may be 5 nm to 100 nm.

An average particle diameter (D50) of the silicon particle may be 10 nm to 20 µm, and for example, 10 nm to 500 nm. The silicon particle may be present in an oxidized form, and in this case, an atomic content ratio of Si:O in the silicon particle, which indicates a degree of oxidation, may be 99:1 to 33:67. The silicon particle may be a SiOₓ particle, in which case a range of x in SiOₓ may be greater than 0 and less than 2. Here, the average particle diameter (D50) is measured with a particle size analyzer using a laser diffraction method and refers to a diameter of a particle with a cumulative volume of 50% by volume in the particle size distribution.

The Si-based negative electrode active material or Sn-based negative electrode active material may be used by mixing with a carbon-based negative electrode active material. A mixing ratio of the Si-based negative electrode active material or Sn-based negative electrode active material and the carbon-based negative electrode active material may be 1:99 to 90:10 at a weight ratio.

The content of the negative electrode active material in the negative electrode active material layer may be 95 wt% to 99 wt% with respect to the total weight of the negative electrode active material layer.

In an embodiment, the negative electrode active material layer further includes a binder, and optionally, may further include a conductive material. The content of the binder in the negative electrode active material layer may be 1 wt% to 5 wt% with respect to the total weight of the negative electrode active material layer. In addition, when a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to adhere the negative electrode active material particles to each other well and also to adhere the negative electrode active material to the current collector well. The binder may include a water-insoluble binder, a water-soluble binder, or a combination thereof.

Examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

Examples of the water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluoro rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, alkali metal salts thereof, or a combination thereof. As the alkali metal, Na, K, or Li may be used. An amount of the thickener used may be 0.1 to 3 parts by weight with respect to 100 parts by weight of the negative electrode active material.

The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

As another example, the negative electrode for an all-solid-state battery may be a precipitation-type negative electrode. The precipitation-type negative electrode refers to a negative electrode which does not include a negative electrode active material during assembling of a battery but in which lithium metal or the like is precipitated during charging of the battery and serves as a negative electrode active material.

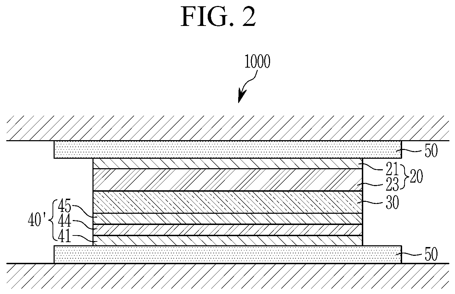

FIG. 2 illustrates a schematic cross-sectional view of an all-solid rechargeable battery including a precipitation-type negative electrode according to an embodiment. Referring to FIG. 2, a precipitation-type negative electrode 40' may include a current collector 41 and a negative electrode coating layer 45 disposed on the current collector. In an all-solid battery having the precipitation-type negative electrode 40', initial charging begins in the absence of a negative electrode active material, and during the charging, lithium metal with a high density or the like is precipitated between the current collector 41 and the negative electrode coating layer 45 and forms a lithium metal layer 44, which can serve as a negative electrode active material. Accordingly, in an all-solid battery that has been charged once or more, the precipitation-type negative electrode 40' may include the current collector 41, the lithium metal layer 44 disposed on the current collector, and the negative electrode coating layer 45 disposed on the metal layer. The lithium metal layer 44 refers to a layer of lithium metal or the like precipitated during the charging process of the battery and may be called a metal layer or a negative electrode active material layer.

The negative electrode coating layer 45 may include metal, a carbon material, or a combination thereof that serves as a catalyst.

The metal may include, for example, gold, platinum, palladium, silicon, silver, aluminum, bismuth, tin, zinc, or a combination thereof, and may be composed of one selected therefrom or an alloy of more than one thereof. When the metal is present in the form of a particle, an average particle diameter (D50) thereof may be about 4 µm or less, for example, 10 nm to 4 µm.

The carbon material may be, for example, crystalline carbon, amorphous carbon, or a combination thereof. The crystalline carbon may be, for example, natural graphite, artificial graphite, a mesophase carbon microbead, or a combination thereof. The amorphous carbon may be, for example, carbon black, activated carbon, acetylene black, Denka black, Ketjen black, or a combination thereof.

When the negative electrode coating layer 45 includes both the metal and the carbon material, a mixing ratio of the metal and the carbon material may be, for example, 1:10 to 2:1 at a weight ratio. In this case, the precipitation of lithium metal can be effectively promoted and the characteristics of the all-solid-state battery can be improved. The negative electrode coating layer 45 may include, for example, a carbon material on which catalyst metal is supported, or a mixture of metal particles and carbon material particles.

The negative electrode coating layer 45 may include, for example, the metal and amorphous carbon, and in this case, the precipitation of lithium metal may be effectively promoted.

The negative electrode coating layer 45 may further include a binder, and the binder may be a conductive binder. Furthermore, the negative electrode coating layer 45 may further include general additives such as a filler, a dispersant, and an ion conductive material.

A thickness of the negative electrode coating layer 45 may be, for example, 100 nm to 20 µm, 500 nm to 10 µm, or 1 µm to 5 µm.

For example, the precipitation-type negative electrode 40' may further include a thin film on the surface of the current collector, that is, between the current collector and the negative electrode coating layer. The thin film may contain an element that can form an alloy with lithium. The element that can form an alloy with lithium may be, for example, gold, silver, zinc, tin, indium, silicon, aluminum, bismuth, and the like, which may be used alone or as an alloy of more than one thereof. The thin film can further planarize a precipitation shape of the lithium metal layer 44 and further improve the characteristics of the all-solid battery. The thin film may be formed by, for example, a vacuum deposition method, a sputtering method, a plating method, or the like. The thin film may have, for example, a thickness ranging from 1 nm to 500 nm.

### Solid Electrolyte Layer

The solid electrolyte layer 30 may include a sulfide-based solid electrolyte, an oxide-based solid electrolyte, and the like. The specific description of the sulfide-based solid electrolyte and the oxide-based solid electrolyte are the same as above.

In one example, the solid electrolyte included in the positive electrode 20 and the solid electrolyte included in the solid electrolyte layer 30 may include the same compound or different compounds. For example, when both the positive electrode 20 and the solid electrolyte layer 30 include an argyrodite-type sulfide-based solid electrolyte, the overall performance of the all-solid rechargeable battery may be improved. Furthermore, as an example, when both the positive electrode 20 and the solid electrolyte layer 30 include the coated solid electrolyte described above, the all-solid rechargeable battery may implement excellent initial efficiency and life characteristics while implementing a high capacity and a high energy density.

Meanwhile, the average particle diameter (D50) of the solid electrolyte included in the positive electrode 20 may be smaller than the average particle diameter (D50) of the solid electrolyte included in the solid electrolyte layer 30. In this case, the overall performance can be improved by maximizing the energy density of the all-solid-state battery and increasing the mobility of lithium ions. For example, the average particle diameter (D50) of the solid electrolyte included in the positive electrode 20 may be 0.1 µm to 1.0 µm, or 0.1 µm to 0.8 µm, and the average particle diameter (D50) of the solid electrolyte included in the solid electrolyte layer 30 may be 1.5 µm to 5.0 µm, 2.0 µm to 4.0 µm, or 2.5 µm to 3.5 µm. When the above particle diameter ranges are satisfied, the energy density of the all-solid rechargeable battery is maximized and the transfer of lithium ions is facilitated, making it possible to suppress resistance and thus to improve the overall performance of the all-solid rechargeable battery. Here, the average particle diameter (D50) of the solid electrolyte may be measured with a particle size analyzer using a laser diffraction method. Alternatively, a particle size distribution may be obtained by measuring sizes of about 20 particles selected from a microscope image such as a scanning electron microscope, and a D50 value may be calculated from the particle size distribution.

The solid electrolyte layer may further include a binder, in addition to the solid electrolyte. In this case, for the binder, a styrene butadiene rubber, polytetrafluoroethylene, polyvinylidene fluoride, polyethylene, an acrylate-based polymer, or a combination thereof may be used, but the present disclosure is not limited thereto, and any binder used in the art can be used. The acrylate-based polymer may be, for example, butyl acrylate, polyacrylate, polymethacrylate, or a combination thereof.

The solid electrolyte layer may be formed by adding a solid electrolyte to a binder solution, coating a base film with the solution, and drying the resultant. The solvent for the binder solution may be isobutyryl isobutyrate, xylene, toluene, benzene, hexane, or a combination thereof. A process of forming the solid electrolyte layer is widely known in the art, and therefore, a detailed description will be omitted.

A thickness of the solid electrolyte layer may be, for example, 10 µm to 150 µm.

The solid electrolyte layer may further include an alkali metal salt, and/or an ionic liquid, and/or a conductive polymer.

The alkali metal salt may be, for example, a lithium salt. A content of the lithium salt in the solid electrolyte layer may be 1 M or more, for example, 1 M to 4 M. In this case, the lithium salt may improve ionic conductivity by improving lithium ion mobility in the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoro methanesulfonyl)imide, LiTFSI, LiN(SO₂CF₃)₂), lithium bis(fluorosulfonyl)imide LiFSI, LiN(SO₂F)₂), LiCF₃SO₃, LiAsF₆, LiSbF₆, LiClO₄, or a mixture thereof.

Furthermore, the lithium salt may be an imide-based salt. For example, the imide-based lithium salt may include lithium bis(trifluoro methanesulfonyl)imide, LiTFSI, LiN(SO₂CF₃)₂), lithium bis(fluorosulfonyl)imide, LiFSI, LiN(SO₂F)₂). The lithium salt may maintain or improve ionic conductivity by appropriately maintaining chemical reactivity with an ionic liquid.

The ionic liquid refers to a salt or a room temperature molten salt that has a melting point equal to or lower than a room temperature, is in a liquid state at room temperature and is composed of only ions.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations and a mixture thereof, and b) BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, one or more selected from the group consisting of N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer that satisfies the above ranges can maintain or improve ionic conductivity by improving the electrochemical contact area with the electrode. Accordingly, the energy density, discharge capacity, rate characteristics, and the like of the all-solid battery may be improved.

The all-solid battery may include a unit cell having a structure of a positive electrode/a solid electrolyte layer/a negative electrode, a bi-cell structure having a structure of a positive electrode/a solid electrolyte layer/a negative electrode/a solid electrolyte layer/a positive electrode, or a stacked battery in which a structure of a unit battery is repeated.

A shape of the all-solid-state battery is not particularly limited, and may be, for example, a coin shape, a button shape, a sheet shape, a stack shape, a cylindrical shape, a flat shape, or the like. In addition, the all-solid battery may also be applied to large-sized batteries used in electric vehicles, and the like. For example, the all-solid battery may also be used in a hybrid vehicle such as a plug-in hybrid electric vehicle (PHEV). Furthermore, it may be used in fields that require a large amount of power storage, and for example, may also be used to an electric bicycle, an electric tool or the like.

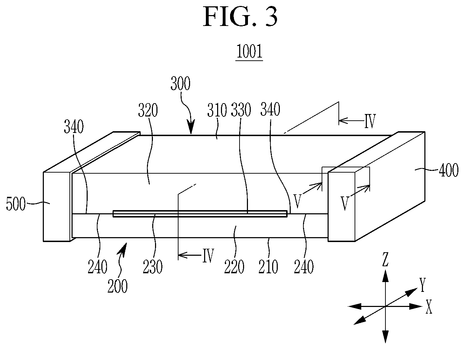

Hereinafter, an all-solid rechargeable battery according to an embodiment will be described with reference to FIG. 3 to FIG. 6.

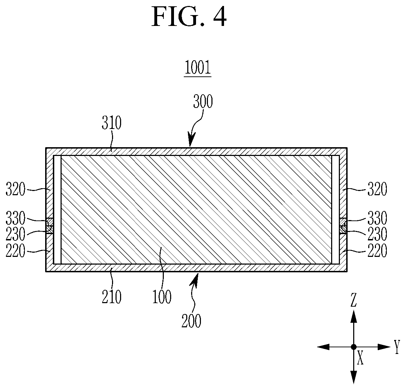

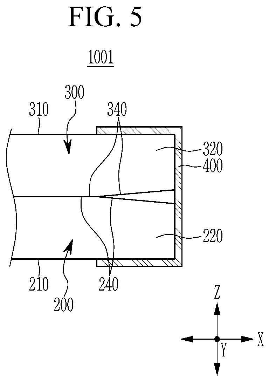

FIG. 3 illustrates a perspective view of an all-solid rechargeable battery according to an embodiment. FIG. 4 illustrates a cross-sectional view taken along line IV-IV of FIG. 3. FIG. 5 illustrates a cross-sectional view taken along line V-V of FIG. 3. FIG. 5 illustrates a cross-sectional view of a first non-welding surface of a first can and a second non-welding surface of a second can disposed inside a first cap.

Referring to FIG. 3 to FIG. 5, an all-solid rechargeable battery 1001 according to an embodiment minimizes interfacial resistance of an all-solid cell stack 100, and includes the all-solid cell stack 100, a first can 200, a second can 300, a first cap 400, and a second cap 500.

The all-solid cell stack 100 is a stack in which at least one all-solid cell, which is the all-solid battery described above, is stacked in the thickness direction. The stacked structure of the all-solid cell stack 100 may include various known stacked structures.

The first can 200 covers the lower portion of the all-solid cell stack 100. The first can 200 is coupled to the second can 300, the first cap 400, and the second cap 500 to surround the all-solid cell stack 100 and at the same time to press the all-solid cell stack 100 in the thickness direction. The first can 200 is welded to the second can 300 to press the all-solid cell stack 100 in the direction of the second can 300. The first can 200 may include various known metals such as stainless steel and aluminum.

The first can 200 includes a first plate portion 210, a first side wall portion 220, a first welding surface 230, and a first non-welding surface 240.

The first plate portion 210 covers the lower portion of the all-solid cell stack 100. The first plate portion 210 completely covers the lower portion of the all-solid cell stack 100, and both end portions of the first plate portion 210 in the first direction (X) are respectively inserted into the first cap 400 and the second cap 500.

The first side wall portion 220 is bent and extended from the first plate portion 210 to surround the all-solid cell stack 100. The first welding surface 230 and the first non-welding surface 240 are disposed on the first side wall portion 220. The first side wall portion 220 is bent and extended in the third direction (Z) from both end portions in the second direction (Y) intersecting the first direction (X) of the first plate portion 210 to surround both side portions of the all-solid cell stack 100 in the second direction (Y). Here, the third direction (Z) intersects the first direction (X) and the second direction (Y). The first side wall portion 220 is welded to the second side wall portion 320 of the second can 300 by the first welding surface 230.

The first welding surface 230 extends along the first direction (X) in the central area of the first side wall portion 220. The first welding surface 230 is welded to the second welding surface 330 of the second can 300. The first welding surface 230 is welded to the second welding surface 330 of the second can 300 in a state in which the first can 200 and the second can 300 press the all-solid cell stack 100. The first welding surface 230 may be welded to the second welding surface 330 using a welding device such as a laser beam, but is not limited thereto, and may be welded to the second welding surface 330 using various known welding devices. The first welding surface 230 of the first can 200 is welded to the second welding surface 330 of the second can 300 in the state in which the first can 200 and the second can 300 press the all-solid cell stack 100, so that the all-solid cell stack 100 is pressed while the first can 200 and the second can 300 are welded to each other.

The first non-welding surface 240 is adjacent to the first welding surface 230 to extend along the first direction (X) in the outer area of the first side wall portion 220. The first non-welding surface 240 is non-welded to the second can 300 to extend from the first welding surface 230 in the first direction (X), which is the first cap 400 direction, to be inserted into the first cap 400. At least a portion of the first non-welding surface 240 is inserted into the first cap 400, but the present disclosure is not limited thereto, and the entire first non-welding surface 240 may be inserted into the first cap 400. The first non-welding surface 240 is non-welded to the second can 300 to extend from the first welding surface 230 to the first direction (X), which is the second cap 500 direction, to be inserted into the second cap 500. At least a portion of the first non-welding surface 240 is inserted into the second cap 500, but the present disclosure is not limited thereto, and the entire first non-welding surface 240 may be inserted into the second cap 500. The first non-welding surface 240 is inclined and extended along the first direction (X) so as to be away from the second can 300 from the first welding surface 230. At least a portion of the first non-welding surface 240 is in non-contact with the second non-welding surface 340 of the second can 300. For example, referring to FIG. 5, the first non-welding surface 240 obliquely extends along the first direction (X) so as to move away from the first welding surface 230 and the second non-welding surface 340 of the second can 300 in the third direction (Z), so that the first non-welding surface 240 disposed at both end portions in the first direction (X) of the first side wall portion 220 is in contact with the second non-welding surface 340 of the second can 300.

The second can 300 covers the upper portion of the all-solid cell stack 100. The second can 300 is coupled to the first can 200, the first cap 400, and the second cap 500 to surround the all-solid cell stack 100 and at the same time to press the all-solid cell stack 100 in the third direction (Z), which is the thickness direction. The second can 300 is welded to the first can 200 to press the all-solid cell stack 100 in the third direction (Z), which is the direction of the first can 200. The second can 300 may include various known metals such as stainless steel and aluminum.

The second can 300 includes a second plate portion 310, a second side wall portion 320, a second welding surface 330, and a second non-welding surface 340.

The second plate portion 310 covers the upper portion of the all-solid cell stack 100. The second plate portion 310 completely covers the upper portion of the all-solid cell stack 100, and both end portions of the second plate portion 310 in the first direction (X) are respectively inserted into the first cap 400 and the second cap 500. The second plate portion 310, together with the first plate portion 210 of the first can 200, presses the all-solid cell stack 100 in the third direction (Z).

The second side wall portion 320 is bent and extended from the second plate portion 310 to surround the all-solid cell stack 100. The second welding surface 330 and the second non-welding surface 340 are disposed on the second side wall portion 320. The second side wall portion 320 is bent and extended in the third direction (Z) from both end portions in the second direction (Y) of the second plate portion 310 to surround both side portions of the all-solid cell stack 100 in the second direction (Y). The second side wall portion 320 is welded to the first side wall portion 220 of the first can 200 by the second welding surface 330.

The second welding surface 330 extends along the first direction (X) from the central area of the second side wall portion 320. The second welding surface 330 is welded to the first welding surface 230 of the first can 200. The second welding surface 330 is welded to the first welding surface 230 of the first can 200 while the second can 300 and the first can 200 are pressing the all-solid cell stack 100 in the third direction (Z). The second welding surface 330 may be welded to the first welding surface 230 using a welding device such as a laser beam, but is not limited thereto, and may be welded to the first welding surface 230 using various known welding devices. In a state in which the second can 300 and the first can 200 press the all-solid cell stack 100 in the third direction (Z), which is the thickness direction, the second welding surface 330 of the second can 300 is welded to the first welding surface 230 of the first can 200, so that the all-solid cell stack 100 is pressed in the third direction (Z) while the second can 300 and the first can 200 are welded to each other.

The second non-welding surface 340 is adjacent to the second welding surface 330 to extend along the first direction (X) in the outer area of the second side wall portion 320. The second non-welding surface 340 is non-welded to the first can 200 to extend from the second welding surface 330 in the first direction (X), which is the first cap 400 direction, to be inserted into the first cap 400. At least a portion of the second non-welding surface 340 is inserted into the first cap 400, but the present disclosure is not limited thereto, and the entire second non-welding surface 340 may be inserted into the first cap 400. The second non-welding surface 340 is non-welded to the first can 200 to extend from the second welding surface 330 in the first direction (X), which is the second cap 500 direction, to be inserted into the second cap 500. At least a portion of the second non-welding surface 340 is inserted into the second cap 500, but the present disclosure is not limited thereto, and the entire second non-welding surface 340 may be inserted into the second cap 500. The second non-welding surface 340 is inclined and extended along the first direction (X) so as to be away from the first can 200 from the second welding surface 330. At least a portion of the second non-welding surface 340 is in non-contact with the first non-welding surface 240 of the first can 200. For example, referring to FIG. 5, the second non-welding surface 340 obliquely extends along the first direction (X) so as to move away from the second welding surface 330 and the first non-welding surface 240 of the first can 200 in the third direction (Z), so that the second non-welding surface 340 disposed at both end portions in the first direction (X) of the second side wall portion 320 is in contact with the first non-welding surface 240 of the first can 200.

The first cap 400 covers one side portion of the all-solid cell stack 100, and the first can 200 and the second can 300 are inserted into the first cap 400. The first cap 400 covers one side portion of the all-solid cell stack 100 in the first direction (X), and the first non-welding surface 240 of the first can 200 and the second non-welding surface 340 of the second can 300 are inserted. By inserting the inclined first non-welding surface 240 of the first can 200 and the inclined second non-welding surface 340 of the second can 300 into the first cap 400, the first non-welding surface 240 of the first can 200 moves in the direction of the second can 300 together with the first plate portion 210, and the second non-welding surface 340 of the second can 300 moves in the direction of the first can 200 together with the second plate portion 310, so that the first can 200 and the second can 300, which press the all-solid cell stack 100 in the third direction (Z), which is the thickness direction, by welding each other, further press the all-solid cell stack 100 in the third direction (Z), which is the thickness direction. The first cap 400 may be welded to the first can 200 and the second can 300, but is not limited thereto. The first cap 400 may include various known metals such as stainless steel and aluminum.

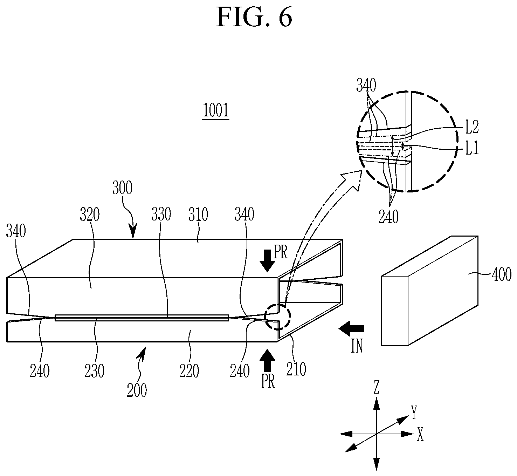

FIG. 6 illustrates a perspective view of an example in which a first cap is coupled to one side portion of each of a first can and a second can in an all-solid rechargeable battery according to an embodiment. FIG. 6 does not illustrate the all-solid cell stack disposed inside the first can and the second can to clearly illustrate the coupling structure, but when the first cap is coupled to one side portion of the first can and the second can, the all-solid cell stack is disposed inside the first can and the second can to be pressed by the first can and the second can.

For example, referring to FIG. 6, when the first cap 400 is coupled to one side portion of the first can 200 and the second can 300 in the first direction (X), the first non-welding surface 240 of the first can 200 and the second non-welding surface 340 of the second can 300 are pressed (PR) in the third direction (Z) and inserted (IN) into the first cap 400. In this case, the distance between the first non-welding surface 240 of the first can 200 and the second non-welding surface 340 of the second can 300 has a first length L1 when the all-solid cell stack is pressed (PR) in the third direction (Z), and when the first non-welding surface 240 and the second non-welding surface 340 are inserted (IN) into the first cap 400, the distance has a second length L2 longer than the first length L1 by a restoring force of each of the first and second cans 200 and 300. Here, the first length L1 and the second length L2 between the first non-welding surface 240 of the first can 200 and the second non-welding surface 340 of the second can 300 are smaller than the initial distance between the first non-welding surface 240 of the first can 200 and the second non-welding surface 340 of the second can 300. Accordingly, the first can 200 and the second can 300 pressing the all-solid cell stack in the third direction (Z) corresponding to the thickness direction due to welding between them further press the all-solid cell stack in the third direction (Z) corresponding the thickness direction.

In another embodiment, the first non-welding surface 240 disposed on both side portions of the first can 200 and the second can 300 in the first direction (X) are inserted into the first cap 400 and the second cap 500 so that the first can 200 and the second can 300 press the all-solid cell stack in the third direction (Z), and in this state, the first welding surface 230 of the first can 200 and the second welding surface 330 of the second can 300 may be welded.

Referring to FIG. 3, the second cap 500 covers the other side portion of the all-solid cell stack 100, and the first can 200 and the second can 300 are inserted into the second cap 500. The second cap 500 covers the other side portion of the all-solid cell stack 100 in the first direction (X), and the first non-welding surface 240 of the first can 200 and the second non-welding surface 340 of the second can 300 are inserted. By inserting the inclined first non-welding surface 240 of the first can 200 and the inclined second non-welding surface 340 of the second can 300 into the second cap 500, the first non-welding surface 240 of the first can 200 moves in the direction of the second can 300 together with the first plate portion 210, and the second non-welding surface 340 of the second can 300 moves in the direction of the first can 200 together with the second plate portion 310, so that the first can 200 and the second can 300, which press the all-solid cell stack 100 in the third direction (Z), which is the thickness direction, by welding each other, further press the all-solid cell stack 100 in the third direction (Z), which is the thickness direction. The second cap 500 may be welded to the first can 200 and the second can 300, but is not limited thereto. The second cap 500 may include various known metals such as stainless steel and aluminum.

As described above, according to the all-solid rechargeable battery 1001 of the embodiment, by welding the first welding surface 230 of the first can 200 to the second welding surface 330 of the second can 300 in a state in which the first can 200 and the second can 300 press the all-solid cell stack 100 in the third direction (Z), which is the thickness direction, because the all-solid cell stack 100 is pressed in the third direction ((Z) in the state in which the first can 200 and the second can 300 are welded to each other, even if the all-solid cell stack 100 is surrounded by the first can 200 and the second can 300, which have elastic restoring force due to their own strength, the interface resistance of the all-solid cell stack 100 is minimized.

In addition, according to the all-solid rechargeable battery 1001 of the embodiment, the first non-welding surface 240 and the second non-welding surface 340 of the first can 200 and the second can 300 that press the all-solid cell stack 100 in the third direction (Z) corresponding to the thickness direction due to welding between them are respectively inserted into the first cap 400 and the second cap 500, so that the first can 200 and the second can 300 further press the all-solid cell stack 100 in the third direction (Z) corresponding the thickness direction, and accordingly, even if the all-solid cell stack 100 is surrounded by the first can 200 and the second can 300, which have elastic restoring force due to their own strength, the interface resistance of the all-solid cell stack 100 is minimized.

In other words, even if the all-solid cell stack is surrounded by a can, the all-solid rechargeable battery 1001 with minimized interface resistance is provided.

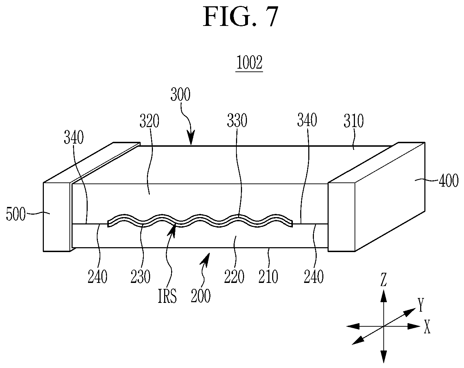

Hereinafter, an all-solid rechargeable battery according to another embodiment will be described with reference to FIG. 7. Hereinafter, elements different from those of the all-solid rechargeable battery according to the above-described embodiment will be described.

FIG. 7 illustrates a perspective view of an all-solid rechargeable battery according to another embodiment.

Referring to FIG. 7, an all-solid rechargeable battery 1002 according to another embodiment minimizes interfacial resistance of an all-solid cell stack, and includes the all-solid cell stack, a first can 200, a second can 300, a first cap 400, and a second cap 500.

The first can 200 includes a first plate portion 210, a first side wall portion 220, a first welding surface 230, and a first non-welding surface 240.

The first welding surface 230 extends along the first direction (X) in the central area of the first side wall portion 220. The first welding surface 230 is welded to the second welding surface 330 of the second can 300. The first welding surface 230 is welded to the second welding surface 330 of the second can 300 in a state in which the first can 200 and the second can 300 press the all-solid cell stack. The first welding surface 230 may be welded to the second welding surface 330 using a welding device such as a laser beam, but is not limited thereto, and may be welded to the second welding surface 330 using various known welding devices. The first welding surface 230 of the first can 200 is welded to the second welding surface 330 of the second can 300 in the state in which the first can 200 and the second can 300 press the all-solid cell stack, so that the all-solid cell stack 100 is pressed in the third direction (Z), which is the thickness direction, while the first can 200 and the second can 300 are welded to each other.

The first welding surface 230 includes an uneven structure IRS extending in the first direction (X), which is the direction of the first non-welding surface 240. The interface between the first welding surface 230 and the second welding surface 330 includes an uneven structure IRS extending in the first direction (X), which is the direction of the first cap 400 and the second cap 500. The uneven structure IRS of the first welding surface 230 includes a convex surface.

The second can 300 includes a second plate portion 310, a second side wall portion 320, a second welding surface 330, and a second non-welding surface 340.

The second welding surface 330 extends along the first direction (X) from the central area of the second side wall portion 320. The second welding surface 330 is welded to the first welding surface 230 of the first can 200. The second welding surface 330 is welded to the first welding surface 230 of the first can 200 while the second can 300 and the first can 200 are pressing the all-solid cell stack in the third direction (Z). The second welding surface 330 may be welded to the first welding surface 230 using a welding device such as a laser beam, but is not limited thereto, and may be welded to the first welding surface 230 using various known welding devices. In a state in which the second can 300 and the first can 200 press the all-solid cell stack in the third direction (Z), which is the thickness direction, the second welding surface 330 of the second can 300 is welded to the first welding surface 230 of the first can 200, so that the all-solid cell stack is pressed in the third direction (Z) while the second can 300 and the first can 200 are welded to each other.

The second welding surface 330 includes an uneven structure IRS extending in the first direction (X), which is the direction of the second non-welding surface 340. The interface between the second welding surface 330 and the first welding surface 230 includes an uneven structure IRS extending in the first direction (X), which is the direction of the first cap 400 and the second cap 500. The uneven structure IRS of the second welding surface 330 includes a convex surface.

As described above, according to the all-solid battery 1002 according to another embodiment, the interface between the first welding surface 230 and the second welding surface 330 includes the uneven structure IRS, so that the surface area of the interface between the first welding surface 230 and the second welding surface 330 increases, and accordingly, because the all-solid cell stack is firmly pressed in the third direction (Z) while the first can 200 and the second can 300 are welded to each other, even if the all-solid cell stack is surrounded by the first can 200 and the second can 300, which have elastic restoring force due to their own strength, the interface resistance of the all-solid cell stack is minimized.

In addition, according to the all-solid rechargeable battery 1002 of another embodiment, the first non-welding surface 240 and the second non-welding surface 340 of the first can 200 and the second can 300 that firmly press the all-solid cell stack in the third direction (Z) corresponding to the thickness direction due to welding between them are respectively inserted into the first cap 400 and the second cap 500, so that the first can 200 and the second can 300 further press the all-solid cell stack in the third direction (Z) corresponding the thickness direction, and accordingly, even if the all-solid cell stack is surrounded by the first can 200 and the second can 300, which have elastic restoring force due to their own strength, the interface resistance of the all-solid cell stack is minimized.

In other words, even if the all-solid cell stack is surrounded by a can, the all-solid rechargeable battery 1002 with minimized interface resistance is provided.

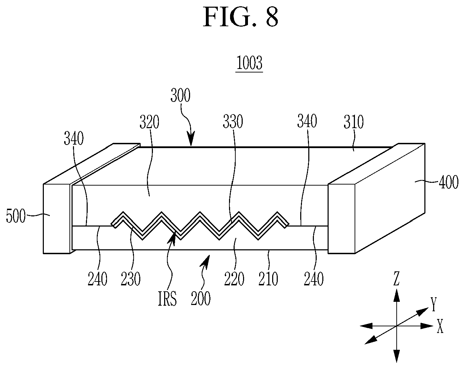

Hereinafter, an all-solid rechargeable battery according to another embodiment will be described with reference to FIG. 8. Hereinafter, elements different from those of the all-solid rechargeable battery according to the above-described embodiment will be described.

FIG. 8 illustrates a perspective view of an all-solid rechargeable battery according to another embodiment.

Referring to FIG. 8, an all-solid rechargeable battery 1003 according to another embodiment minimizes interfacial resistance of an all-solid cell stack, and includes the all-solid cell stack, a first can 200, a second can 300, a first cap 400, and a second cap 500.

The first can 200 includes a first plate portion 210, a first side wall portion 220, a first welding surface 230, and a first non-welding surface 240.

The first welding surface 230 extends along the first direction (X) in the central area of the first side wall portion 220. The first welding surface 230 is welded to the second welding surface 330 of the second can 300. The first welding surface 230 is welded to the second welding surface 330 of the second can 300 in a state in which the first can 200 and the second can 300 press the all-solid cell stack. The first welding surface 230 may be welded to the second welding surface 330 using a welding device such as a laser beam, but is not limited thereto, and may be welded to the second welding surface 330 using various known welding devices. The first welding surface 230 of the first can 200 is welded to the second welding surface 330 of the second can 300 in the state in which the first can 200 and the second can 300 press the all-solid cell stack, so that the all-solid cell stack 100 is pressed in the third direction (Z), which is the thickness direction, while the first can 200 and the second can 300 are welded to each other.

The first welding surface 230 includes an uneven structure IRS extending in the first direction (X), which is the direction of the first non-welding surface 240. The interface between the first welding surface 230 and the second welding surface 330 includes an uneven structure IRS extending in the first direction (X), which is the direction of the first cap 400 and the second cap 500. The uneven structure IRS of the first welding surface 230 includes a triangular surface.

The second can 300 includes a second plate portion 310, a second side wall portion 320, a second welding surface 330, and a second non-welding surface 340.

The second welding surface 330 extends along the first direction (X) from the central area of the second side wall portion 320. The second welding surface 330 is welded to the first welding surface 230 of the first can 200. The second welding surface 330 is welded to the first welding surface 230 of the first can 200 while the second can 300 and the first can 200 are pressing the all-solid cell stack in the third direction (Z). The second welding surface 330 may be welded to the first welding surface 230 using a welding device such as a laser beam, but is not limited thereto, and may be welded to the first welding surface 230 using various known welding devices. In a state in which the second can 300 and the first can 200 press the all-solid cell stack in the third direction (Z), which is the thickness direction, the second welding surface 330 of the second can 300 is welded to the first welding surface 230 of the first can 200, so that the all-solid cell stack is pressed in the third direction (Z) while the second can 300 and the first can 200 are welded to each other.

The second welding surface 330 includes an uneven structure IRS extending in the first direction (X), which is the direction of the second non-welding surface 340. The interface between the second welding surface 330 and the first welding surface 230 includes an uneven structure IRS extending in the first direction (X), which is the direction of the first cap 400 and the second cap 500. The uneven structure IRS of the second welding surface 330 includes a triangular surface.

Meanwhile, in another embodiment, the uneven structure IRS of the first welding surface 230 and the second welding surface 330 may include various known uneven structures such as circular, elliptical, quadrangular, pentagonal, polygonal, and irregular shapes

As described above, according to the all-solid battery 1003 according to another embodiment, the interface between the first welding surface 230 and the second welding surface 330 includes the uneven structure IRS, so that the surface area of the interface between the first welding surface 230 and the second welding surface 330 increases, and accordingly, because the all-solid cell stack is firmly pressed in the third direction (Z) while the first can 200 and the second can 300 are welded to each other, even if the all-solid cell stack is surrounded by the first can 200 and the second can 300, which have elastic restoring force due to their own strength, the interface resistance of the all-solid cell stack is minimized.

In addition, according to the all-solid rechargeable battery 1003 of another embodiment, the first non-welding surface 240 and the second non-welding surface 340 of the first can 200 and the second can 300 that firmly press the all-solid cell stack in the third direction (Z) corresponding to the thickness direction due to welding between them are respectively inserted into the first cap 400 and the second cap 500, so that the first can 200 and the second can 300 further press the all-solid cell stack 100 in the third direction (Z) corresponding the thickness direction, and accordingly, even if the all-solid cell stack is surrounded by the first can 200 and the second can 300, which have elastic restoring force due to their own strength, the interface resistance of the all-solid cell stack is minimized.

In other words, even if the all-solid cell stack is surrounded by a can, the all-solid rechargeable battery 1003 with minimized interface resistance is provided.

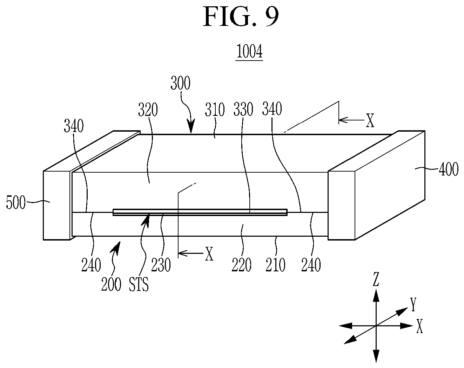

Hereinafter, an all-solid rechargeable battery according to another embodiment will be described with reference to FIG. 9 to FIG. 11. Hereinafter, elements different from those of the all-solid rechargeable battery according to the above-described embodiment will be described.

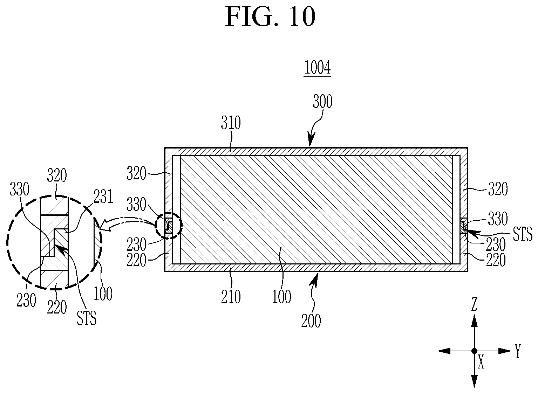

FIG. 9 illustrates a perspective view of an all-solid rechargeable battery according to another embodiment. FIG. 10 illustrates a cross-sectional view taken along line X-X of FIG. 9.

Referring to FIG. 9 and FIG. 10, an all-solid rechargeable battery 1004 according to another embodiment minimizes interfacial resistance of an all-solid cell stack 100, and includes the all-solid cell stack 100, a first can 200, a second can 300, a first cap 400, and a second cap 500.

The first can 200 includes a first plate portion 210, a first side wall portion 220, a first welding surface 230, and a first non-welding surface 240.

The first welding surface 230 extends along the first direction (X) in the central area of the first side wall portion 220. The first welding surface 230 is welded to the second welding surface 330 of the second can 300. The first welding surface 230 is welded to the second welding surface 330 of the second can 300 in a state in which the first can 200 and the second can 300 press the all-solid cell stack 100. The first welding surface 230 may be welded to the second welding surface 330 using a welding device such as a laser beam, but is not limited thereto, and may be welded to the second welding surface 330 using various known welding devices. The first welding surface 230 of the first can 200 is welded to the second welding surface 330 of the second can 300 in the state in which the first can 200 and the second can 300 press the all-solid cell stack, so that the all-solid cell stack is pressed in the third direction (Z), which is the thickness direction, while the first can 200 and the second can 300 are welded to each other.

The first welding surface 230 includes a step structure STS recessed in the third direction (Z) from the direction of the second can 300. The step structure STS of the first welding surface 230 includes a first blocking wall 231 protruding in the third direction (Z) and disposed between the second can 300 and the all-solid cell stack 100.

The second can 300 includes a second plate portion 310, a second side wall portion 320, a second welding surface 330, and a second non-welding surface 340.

The second welding surface 330 extends along the first direction (X) from the central area of the second side wall portion 320. The second welding surface 330 is welded to the first welding surface 230 of the first can 200. The second welding surface 330 is welded to the first welding surface 230 of the first can 200 while the second can 300 and the first can 200 are pressing the all-solid cell stack 100 in the third direction (Z). The second welding surface 330 may be welded to the first welding surface 230 using a welding device such as a laser beam, but is not limited thereto, and may be welded to the first welding surface 230 using various known welding devices. In a state in which the second can 300 and the first can 200 press the all-solid cell stack 100 in the third direction (Z), which is the thickness direction, the second welding surface 330 of the second can 300 is welded to the first welding surface 230 of the first can 200, so that the all-solid cell stack 100 is pressed in the third direction (Z) while the second can 300 and the first can 200 are welded to each other.

The second welding surface 330 includes a step structure corresponding to the first welding surface 230 including the step structure STS.

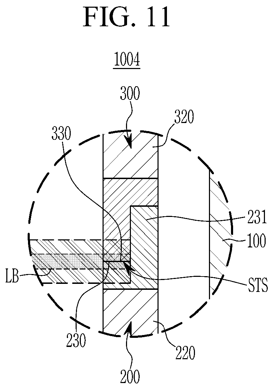

FIG. 11 illustrates a partial cross-sectional view of a case in which a first welding surface and a second welding surface of the all-solid rechargeable battery according to another embodiment shown in FIG. 10 is welded using a laser beam.

Referring to FIG. 11, when welding between the first welding surface 230 of the first can 200 and the second welding surface 330 of the second can 300 using a laser beam LB, the first blocking wall 231 included in the step structure STS of the first welding surface 230 protrudes in the third direction (Z) to be disposed between the second can 300 and the all-solid cell stack 100, so that because the laser beam LB is blocked by the first blocking wall 231 from passing through the all-solid cell stack 100, damage to the all-solid cell stack 100 is suppressed by welding between the first can 200 and the second can 300.

As described above, in the all-solid rechargeable battery 1004 according to another embodiment, the first welding surface 230 includes the step structure STS including the first blocking wall 231, so that because the laser beam LB welding between the first welding surface 230 and the second welding surface 330 is blocked from passing through the all-solid cell stack 100 by the first blocking wall 231, damage to the all-solid cell stack 100 by welding between the first can 200 and the second can 300 is suppressed.

In addition, in the all-solid rechargeable battery 1004 according to another embodiment, by welding the first welding surface 230 of the first can 200 to the second welding surface 330 of the second can 300 in a state in which the first can 200 and the second can 300 press the all-solid cell stack 100 in the third direction (Z), which is the thickness direction, because the all-solid cell stack 100 is pressed in the third direction ((Z) in the state in which the first can 200 and the second can 300 are welded to each other, even if the all-solid cell stack 100 is surrounded by the first can 200 and the second can 300, which have elastic restoring force due to their own strength, the interface resistance of the all-solid cell stack 100 is minimized.

In addition, in the all-solid rechargeable battery 1004 according to another embodiment, the first non-welding surface 240 and the second non-welding surface 340 of the first can 200 and the second can 300 that press the all-solid cell stack 100 in the third direction (Z) corresponding to the thickness direction due to welding between them are respectively inserted into the first cap 400 and the second cap 500, so that the first can 200 and the second can 300 further press the all-solid cell stack 100 in the third direction (Z) corresponding the thickness direction, and accordingly, even if the all-solid cell stack 100 is surrounded by the first can 200 and the second can 300, which have elastic restoring force due to their own strength, the interface resistance of the all-solid cell stack 100 is minimized.

In other words, even if the all-solid cell stack is wrapped by a can, the all-solid rechargeable battery 1004 is provided, in which the damage to the all-solid cell stack is suppressed and the interfacial resistance is minimized, due to can welding.

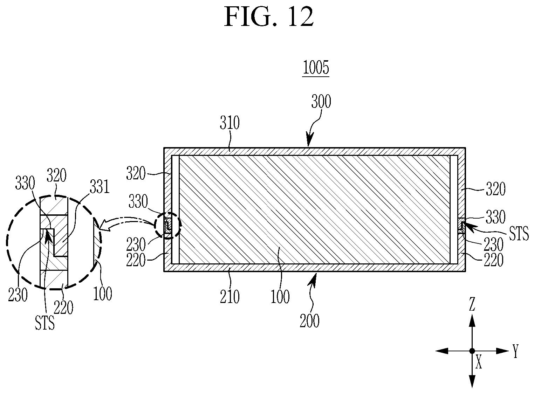

Hereinafter, an all-solid rechargeable battery according to another embodiment will be described with reference to FIG. 12. Hereinafter, elements different from those of the all-solid rechargeable battery according to the above-described embodiment will be described.

FIG. 12 illustrates a cross-sectional view of an all-solid rechargeable battery according to another embodiment.

Referring to FIG. 12, an all-solid rechargeable battery 1005 according to another embodiment minimizes interfacial resistance of an all-solid cell stack 100, and includes the all-solid cell stack 100, a first can 200, a second can 300, a first cap, and a second cap.

The first can 200 includes a first plate portion 210, a first side wall portion 220, a first welding surface 230, and a first non-welding surface.

The first welding surface 230 includes a step structure corresponding to the second welding surface 330 including the step structure STS.

The second can 300 includes a second plate portion 310, a second side wall portion 320, a second welding surface 330, and a second non-welding surface 340.

The second welding surface 330 includes a step structure STS recessed in the third direction (Z) from the direction of the first can 200. The step structure STS of the first welding surface 330 includes a second blocking wall 331 protruding in the third direction (Z) and disposed between the first can 200 and the all-solid cell stack 100.

When welding between the first welding surface 230 of the first can 200 and the second welding surface 330 of the second can 300 using a laser beam, the second blocking wall 331 included in the step structure STS of the second welding surface 330 protrudes in the third direction (Z) to be disposed between the first can 200 and the all-solid cell stack 100, so that because the laser beam is blocked by the second blocking wall 331 from passing through the all-solid cell stack 100, damage to the all-solid cell stack 100 is suppressed by welding between the first can 200 and the second can 300.

As described above, in the all-solid rechargeable battery 1005 according to another embodiment, the second welding surface 330 includes the step structure STS including the second blocking wall 331, so that because the laser beam welding between the first welding surface 230 and the second welding surface 330 is blocked from passing through the all-solid cell stack 100 by the second blocking wall 331, damage to the all-solid cell stack 100 by welding between the first can 200 and the second can 300 is suppressed.

In other words, even if the all-solid cell stack is wrapped by a can, the all-solid rechargeable battery 1005 is provided, in which the damage to the all-solid cell stack is suppressed and the interfacial resistance is minimized, due to can welding.

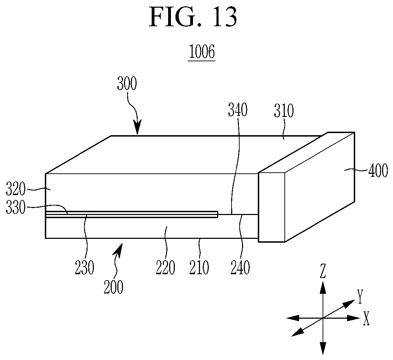

Hereinafter, an all-solid rechargeable battery according to another embodiment will be described with reference to FIG. 13. Hereinafter, elements different from those of the all-solid rechargeable battery according to the above-described embodiment will be described.

FIG. 13 illustrates a perspective view of an all-solid rechargeable battery according to another embodiment.

Referring to FIG. 13, an all-solid rechargeable battery 1006 according to another embodiment minimizes interfacial resistance of an all-solid cell stack, and includes the all-solid cell stack, a first can 200, a second can 300, and a first cap 400.

The first can 200 covers the lower portion of the all-solid cell stack. The first can 200 is coupled to the second can 300 and the first cap 400 to surround the all-solid cell stack and simultaneously presses the all-solid cell stack in the thickness direction. The first can 200 is welded to the second can 300 to press the all-solid cell stack in the direction of the second can 300. The first can 200 may include various known metals such as stainless steel and aluminum.

The first can 200 includes a first plate portion 210, a first side wall portion 220, a first welding surface 230, and a first non-welding surface 240.

The first plate portion 210 covers the lower portion of the all-solid cell stack. The first plate portion 210 completely covers the lower portion of the all-solid cell stack, and one end portion of the first plate portion 210 in the first direction (X) is inserted into the first cap 400.

The first side wall portion 220 is bent and extended from the first plate portion 210 to surround the all-solid cell stack. The first welding surface 230 and the first non-welding surface 240 are disposed on the first side wall portion 220. The first side wall portion 220 is bent and extended in the third direction (Z) from both end portions in the second direction (Y) intersecting the first direction (X) of the first plate portion 210 to surround both side portions of the all-solid cell stack in the second direction (Y). Here, the third direction (Z) intersects the first direction (X) and the second direction (Y). The first side wall portion 220 is welded to the second side wall portion 320 of the second can 300 by the first welding surface 230.

The first welding surface 230 extends along the first direction (X) in the central area of the first side wall portion 220. The first welding surface 230 is welded to the second welding surface 330 of the second can 300. The first welding surface 230 is welded to the second welding surface 330 of the second can 300 in a state in which the first can 200 and the second can 300 press the all-solid cell stack. The first welding surface 230 may be welded to the second welding surface 330 using a welding device such as a laser beam, but is not limited thereto, and may be welded to the second welding surface 330 using various known welding devices. The first welding surface 230 of the first can 200 is welded to the second welding surface 330 of the second can 300 in the state in which the first can 200 and the second can 300 press the all-solid cell stack, so that the all-solid cell stack 100 is pressed while the first can 200 and the second can 300 are welded to each other.

The first non-welding surface 240 is adjacent to the first welding surface 230 to extend along the first direction (X) in the outer area of the first side wall portion 220. The first non-welding surface 240 is non-welded to the second can 300 to extend from the first welding surface 230 in the first direction (X), which is the first cap 400 direction, to be inserted into the first cap 400. At least a portion of the first non-welding surface 240 is inserted into the first cap 400, but the present disclosure is not limited thereto, and the entire first non-welding surface 240 may be inserted into the first cap 400. The first non-welding surface 240 is inclined and extended along the first direction (X) so as to be away from the second can 300 from the first welding surface 230. At least a portion of the first non-welding surface 240 is in non-contact with the second non-welding surface 340 of the second can 300.

The second can 300 covers the upper portion of the all-solid cell stack. The second can 300 is coupled to the first can 200 and the first cap 400 to simultaneously cover the all-solid cell stack and press the all-solid cell stack in the third direction (Z), which is the thickness direction. The second can 300 is welded to the first can 200 to press the all-solid cell stack in the third direction (Z), which is the direction of the first can 200. The second can 300 may include various known metals such as stainless steel and aluminum.

The second can 300 includes a second plate portion 310, a second side wall portion 320, a second welding surface 330, and a second non-welding surface 340.

The second plate portion 310 covers the upper portion of the all-solid cell stack. The second plate portion 310 completely covers the upper portion of the all-solid cell stack, and one end portion of the second plate portion 310 in the first direction (X) is inserted into the first cap 400. The second plate portion 310, together with the first plate portion 210 of the first can 200, presses the all-solid cell stack in the third direction (Z).

The second side wall portion 320 is bent and extended from the second plate portion 310 to surround the all-solid cell stack. The second welding surface 330 and the second non-welding surface 340 are disposed on the second side wall portion 320. The second side wall portion 320 is bent and extended in the third direction (Z) from both end portions in the second direction (Y) of the second plate portion 310 to surround both side portions of the all-solid cell stack in the second direction (Y). The second side wall portion 320 is welded to the first side wall portion 220 of the first can 200 by the second welding surface 330.

The second welding surface 330 extends along the first direction (X) from the central area of the second side wall portion 320. The second welding surface 330 is welded to the first welding surface 230 of the first can 200. The second welding surface 330 is welded to the first welding surface 230 of the first can 200 while the second can 300 and the first can 200 are pressing the all-solid cell stack in the third direction (Z). The second welding surface 330 may be welded to the first welding surface 230 using a welding device such as a laser beam, but is not limited thereto, and may be welded to the first welding surface 230 using various known welding devices. In a state in which the second can 300 and the first can 200 press the all-solid cell stack in the third direction (Z), which is the thickness direction, the second welding surface 330 of the second can 300 is welded to the first welding surface 230 of the first can 200, so that the all-solid cell stack is pressed in the third direction (Z) while the second can 300 and the first can 200 are welded to each other.

The second non-welding surface 340 is adjacent to the second welding surface 330 to extend along the first direction (X) in the outer area of the second side wall portion 320. The second non-welding surface 340 is non-welded to the first can 200 to extend from the second welding surface 330 in the first direction (X), which is the first cap 400 direction, to be inserted into the first cap 400. At least a portion of the second non-welding surface 340 is inserted into the first cap 400, but the present disclosure is not limited thereto, and the entire second non-welding surface 340 may be inserted into the first cap 400. The second non-welding surface 340 is inclined and extended along the first direction (X) so as to be away from the first can 200 from the second welding surface 330. At least a portion of the second non-welding surface 340 is in non-contact with the first non-welding surface 240 of the first can 200.

The first cap 400 covers one side portion of the all-solid cell stack, and the first can 200 and the second can 300 are inserted into the first cap 400. The first cap 400 covers one side portion of the all-solid cell stack in the first direction (X), and the first non-welding surface 240 of the first can 200 and the second non-welding surface 340 of the second can 300 are inserted. By inserting the inclined first non-welding surface 240 of the first can 200 and the inclined second non-welding surface 340 of the second can 300 into the first cap 400, the first non-welding surface 240 of the first can 200 moves in the direction of the second can 300 together with the first plate portion 210, and the second non-welding surface 340 of the second can 300 moves in the direction of the first can 200 together with the second plate portion 310, so that the first can 200 and the second can 300, which press the all-solid cell stack in the third direction (Z), which is the thickness direction, by welding each other, further press the all-solid cell stack in the third direction (Z), which is the thickness direction. The first cap 400 may be welded to the first can 200 and the second can 300, but is not limited thereto. The first cap 400 may include various known metals such as stainless steel and aluminum.

As described above, in the all-solid rechargeable battery 1006 according to another embodiment, by welding the first welding surface 230 of the first can 200 to the second welding surface 330 of the second can 300 in a state in which the first can 200 and the second can 300 press the all-solid cell stack in the third direction (Z), which is the thickness direction, because the all-solid cell stack is pressed in the third direction ((Z) in the state in which the first can 200 and the second can 300 are welded to each other, even if the all-solid cell stack is surrounded by the first can 200 and the second can 300, which have elastic restoring force due to their own strength, the interface resistance of the all-solid cell stack is minimized.

In addition, in the all-solid rechargeable battery 1006 according to another embodiment, the first non-welding surface 240 and the second non-welding surface 340 of the first can 200 and the second can 300 that press the all-solid cell stack in the third direction (Z) corresponding to the thickness direction due to welding between them are respectively inserted into the first cap 400, so that the first can 200 and the second can 300 further press the all-solid cell stack 100 in the third direction (Z) corresponding the thickness direction, and accordingly, even if the all-solid cell stack is surrounded by the first can 200 and the second can 300, which have elastic restoring force due to their own strength, the interface resistance of the all-solid cell stack is minimized.

In other words, even if the all-solid cell stack is surrounded by a can, the all-solid rechargeable battery 1006 with minimized interface resistance is provided.

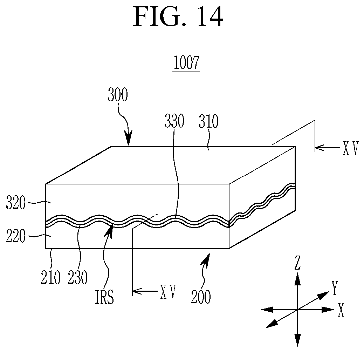

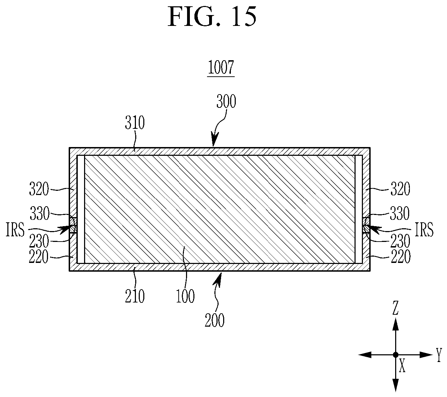

Hereinafter, an all-solid rechargeable battery according to another embodiment will be described with reference to FIG. 14 and FIG. 15. Hereinafter, elements different from those of the all-solid rechargeable battery according to the above-described embodiment will be described.

FIG. 14 illustrates a perspective view of an all-solid rechargeable battery according to another embodiment. FIG. 15 illustrates a cross-sectional view taken along line XV-XV of FIG. 14.

Referring to FIG. 14 and FIG. 15, an all-solid rechargeable battery 1007 according to another embodiment minimizes interfacial resistance of an all-solid cell stack 100, and includes the all-solid cell stack 100, a first can 200, and a second can 300.

The first can 200 covers the lower portion of the all-solid cell stack 100. The first can 200 is coupled to the second can 200 to surround the all-solid cell stack 100 and at the same time to press the all-solid cell stack 100 in the third direction (Z), which is the thickness direction. The first can 200 is welded to the second can 300 to press the all-solid cell stack 100 in the direction of the second can 300. The first can 200 may include various known metals such as stainless steel and aluminum.

The first can 200 includes a first plate portion 210, a first side wall portion 220, and a first welding surface 230.

The first plate portion 210 covers the lower portion of the all-solid cell stack 100. The first plate portion 210 completely covers the lower portion of the all-solid cell stack 100.

The first side wall portion 220 is bent and extended from the first plate portion 210 to surround the all-solid cell stack 100. The first welding surface 230 is disposed at the first side wall portion 220. The first side wall portion 220 is bent and extended from the edge of the first plate portion 210 in the third direction (Z) and surrounds the side portion of the all-solid cell stack 100. The first side wall portion 220 is welded to the second side wall portion 320 of the second can 300 by the first welding surface 230.

The first welding surface 230 extends along the first side wall portion 220. The first welding surface 230 is welded to the second welding surface 330 of the second can 300. The first welding surface 230 is welded to the second welding surface 330 of the second can 300 in a state in which the first can 200 and the second can 300 press the all-solid cell stack 100. The first welding surface 230 may be welded to the second welding surface 330 using a welding device such as a laser beam, but is not limited thereto, and may be welded to the second welding surface 330 using various known welding devices. The first welding surface 230 of the first can 200 is welded to the second welding surface 330 of the second can 300 in the state in which the first can 200 and the second can 300 press the all-solid cell stack 100, so that the all-solid cell stack 100 is pressed while the first can 200 and the second can 300 are welded to each other.

The first welding surface 230 includes an uneven structure IRS. The interface between the first welding surface 230 and the second welding surface 330 includes the uneven structure IRS. The uneven structure IRS of the first welding surface 230 includes a convex surface, but is not limited thereto and may include various known uneven structures.

The second can 300 covers the upper portion of the all-solid cell stack 100. The second can 300 is coupled to the first can 200 to surround the all-solid cell stack 100 and simultaneously presses the all-solid cell stack 100 in the third direction (Z), which is the thickness direction. The second can 300 is welded to the first can 200 to press the all-solid cell stack 100 in the direction of the first can 200. The second can 300 may include various known metals such as stainless steel and aluminum.

The second can 300 includes a second plate portion 310, a second side wall portion 320, and a second welding surface 330.

The second plate portion 310 covers the lower portion of the all-solid cell stack 100. The second plate portion 310 completely covers the lower portion of the all-solid cell stack 100.

The second side wall portion 320 is bent and extended from the second plate portion 310 to surround the all-solid cell stack 100. The second welding surface 330 is disposed at the second side wall portion 320. The second side wall portion 320 is bent and extended from the edge of the second plate portion 310 in the third direction (Z) and surrounds the side portion of the all-solid cell stack 100. The second side wall portion 320 is welded to the first side wall portion 220 of the first can 200 by the second welding surface 330.

The second welding surface 330 extends along the second side wall portion 320. The second welding surface 330 is welded to the first welding surface 230 of the first can 200. The second welding surface 330 is welded to the first welding surface 230 of the first can 200 while the second can 300 and the first can 200 are pressing the all-solid cell stack 100. The second welding surface 330 may be welded to the first welding surface 230 using a welding device such as a laser beam, but is not limited thereto, and may be welded to the first welding surface 230 using various known welding devices. In a state in which the second can 300 and the first can 200 press the all-solid cell stack 100, the second welding surface 330 of the second can 300 is welded to the first welding surface 230 of the first can 200, so that the second can 300 and the first can 200 press the all-solid cell stack 100 while being welded to each other.

The second welding surface 330 includes an uneven structure IRS. The interface between the second welding surface 330 and the first welding surface 230 includes the uneven structure IRS. The uneven structure IRS of the second welding surface 330 includes a convex surface, but is not limited thereto and may include various known uneven structures.

As described above, according to the all-solid battery 1007 according to another embodiment, the interface between the first welding surface 230 and the second welding surface 330 includes the uneven structure IRS, so that the surface area of the interface between the first welding surface 230 and the second welding surface 330 increases, and accordingly, because the all-solid cell stack 100 is firmly pressed in the third direction (Z) while the first can 200 and the second can 300 are welded to each other, even if the all-solid cell stack 100 is surrounded by the first can 200 and the second can 300, which have elastic restoring force due to their own strength, the interface resistance of the all-solid cell stack 100 is minimized.

In other words, even if the all-solid cell stack is surrounded by a can, the all-solid rechargeable battery 1007 with minimized interface resistance is provided.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### [Description of symbols]

all-solid cell stack 100, first can 200, first plate portion 210, first welding surface 230, first non-welding surface 240, second can 300, second plate portion 310, second welding surface 330, second non-welding portion 340, first cap 400, second cap 500

## Claims

1. An all-solid rechargeable battery comprising:
an all-solid cell stack;
a first can covering a lower portion of the all-solid cell stack; and
a second can that covers an upper portion of the all-solid cell stack and is welded to the first can to press the all-solid cell stack in a direction of the first can,
wherein the first can includes a first welded surface including an uneven structure welded to the second can.

2. The all-solid rechargeable battery as claimed in claim 1, wherein the uneven structure of the first welding surface includes a convex surface.

3. The all-solid rechargeable battery as claimed in claim 1, wherein the uneven structure of the first welding surface includes a triangular surface.

4. The all-solid rechargeable battery as claimed in claim 1, wherein the uneven structure of the first welding surface includes a step structure recessed from a direction of the second can.

5. The all-solid rechargeable battery as claimed in claim 4, wherein the step structure of the first welding surface includes a first blocking wall between the second can and the all-solid cell stack.

6. The all-solid rechargeable battery as claimed in claim 1, further comprising:
a first cap that covers one side portion of the all-solid cell stack and into which the first can and the second can are inserted,
wherein the first can further includes a first non-welding surface that is not welded to the second can and extends from the first welding surface in a direction of the first cap to be inserted into the first cap.

7. The all-solid rechargeable battery as claimed in claim 6, wherein the first non-welding surface is inclined and extended so as to be far away from the second can from the first welding surface.

8. The all-solid rechargeable battery as claimed in claim 6, wherein at least a portion of the first non-welding surface is not in contact with the second can.

9. The all-solid rechargeable battery as claimed in claim 6, wherein a distance between the first non-welding surface and the second can has a first length when the all-solid cell stack is pressed, and has a second length longer than the first length due to restoring force of the first can when the first non-welding surface is inserted into the first cap.

10. The all-solid rechargeable battery as claimed in claim 6, wherein the uneven structure of the first welding surface extends in a direction of the first non-welding surface.

11. The all-solid rechargeable battery as claimed in claim 6, wherein the first can further includes:
a first plate portion covering a lower portion of the all-solid cell stack; and
a first side wall portion that is bent and extended to surround the all-solid cell stack from the first plate portion and in which the first welding surface and the first non-welding surface are disposed.

12. The all-solid rechargeable battery as claimed in claim 6, further comprising:
a second cap that covers the other side portion of the all-solid cell stack and into which the first can and the second can are inserted,
wherein the first non-welding surface extends from the first welding surface in a direction of the second cap to be inserted into the second cap.

13. The all-solid rechargeable battery as claimed in claim 6, wherein the second can includes:
a second welding surface welded to the first welding surface of the first can; and
a second non-welding surface that is not welded to the first non-welding surface of the first can and extends from the second welding surface in a direction of the first cap to be inserted into the first cap.

14. The all-solid rechargeable battery as claimed in claim 13, wherein the second non-welding surface is inclined and extended from the second welding surface away from the first non-welding surface of the first can.

15. The all-solid rechargeable battery as claimed in claim 13, wherein at least a portion of the second non-welding surface is in non-contact with the first non-welding surface of the first can.

16. The all-solid rechargeable battery as claimed in claim 13, wherein a distance between the second non-welding surface and the first non-welding surface has a first length when the all-solid cell stack is pressed, and has a second length longer than the first length due to restoring force of the second can and the first can when the second non-welding surface and the first non-welding surface are inserted into the first cap.

17. The all-solid rechargeable battery as claimed in claim 13, wherein an interface between the second welding surface and the first welding surface includes an uneven structure extending in a direction of the first cap.

18. The all-solid rechargeable battery as claimed in claim 13, wherein the second welding surface includes a step structure recessed from a direction of the first can.

19. The all-solid rechargeable battery as claimed in claim 18, wherein the step structure of the second welding surface includes a second blocking wall disposed between the first can and the all-solid cell stack.

20. The all-solid rechargeable battery as claimed in claim 13, wherein the second can includes:
a second plate portion covering an upper portion of the all-solid cell stack; and
a second side wall portion that is bent and extended to surround the all-solid cell stack from the second plate portion and in which the second welding surface and the second non-welding surface are disposed.
